# EUROPÄISCHE PATENTSCHRIFT

(11) **EP 1 193 822 B1**
(45) Veröffentlichungstag und Bekanntmachung des Hinweises auf die Patenterteilung: **07.01.2004**
(21) Anmeldenummer: 01121975.5
(22) Anmeldetag: 13.09.2001
(51) Int. Cl.: H02G 5/00, H02G 5/02, H02B 1/21

(54) **Sammelschienenträger**
Bus bar support
Support de barres bus

(30) Priorität: 29.09.2000 DE 10048806
(43) Veröffentlichungstag der Anmeldung: 03.04.2002
(73) Patentinhaber: Jean Müller GmbH Elektrotechnische Fabrik, 65343 Eltville (DE)
(72) Erfinder: Bollmann, Johannes, Dipl.-Ing., 48231 Warendorf (DE); Kahlau, Richard, Dipl.-Ing., 55296 Harxheim (DE); Mathiowetz, Jörg, Dipl.-Ing., 65366 Geisenheim (DE)
(74) Vertreter: Quermann, Helmut, Dipl.-Ing.

(56) Entgegenhaltungen:
- EP-A- 0 248 160
- DE-U- 29 806 196
- FR-A- 2 308 173

## Beschreibung

Die Erfindung betrifft einen Sammelschienenträger mit einem mehrere, insbesondere drei, parallele Aufnahmenuten für die formschlüssige Einlage jeweils einer Sammelschiene enthaltenden Trägerteil, mit einem auf das Trägerteil deckelartig aufsetzbaren und dabei die in den Aufnahmenuten des Trägerteils liegenden Sammelschienen fixierenden Oberteil, sowie mit mindestens einem der jeweiligen Aufnahmenut zugeordneten Element zum Verkleinern der Nutbreite zwecks Anpassung an eine andere Sammelschienenbreite.

Derartige Sammelschienenträger sind in unterschiedlichen Ausbildungen bekannt. Sie werden beispielsweise in Schaltschränken, Schaltgerüsten oder dergleichen verwendet, in denen der Strom von den Sammelschienen abgegriffen wird. Die Sammelschienen sind insbesondere horizontal angeordnet und weisen einen rechteckigen Querschnitt von je nach den vorgesehenen Stromstärken unterschiedlichen Querschnittsbreiten auf. Die Querschnittsbreiten betragen beispielsweise 15, 20, 25 und 30 mm. Wegen der Dreiphasigkeit sind in der Regel drei als Flachkupferschienen ausgebildete Sammelschienen von einem Sammelschienenträger erfaßt. Die Sammelschienen verlaufen dabei in Abstand zueinander auf derselben Höhe bzw. im selben Abstand zur Montageebene. Wegen der in Abhängigkeit von der Stromstärke unterschiedlichen Breite gängiger Sammelschienen ist gegebenenfalls eine Vielzahl von Haltertypen erforderlich, die mit im Durchmesserquerschnitt unterschiedlichen Abmessungen für die Sammelschienen ausgestattet sind.

Um die Lagerhaltung einer Vielzahl von Sammelschienenträgern mit unterschiedlichen Durchgangsquerschnitten zu vereinfachen, sind Lösungen bekannt geworden, bei denen die Elemente zum Verkleinern der Nutbreite zwecks Anpassung an eine andere Sammelschienenbreite als Adapter ausgebildet sind. Der Adapter ist als Rast- und Steckelement ausgebildet und kann in verschiedenen Positionen mit dem Trägerteil verbunden werden. Ein derartiges Trägersystem ist beispielsweise aus der DE 86 09 413 U1 und der DE 43 12 480 A1 bekannt.

Aus der DE 33 21 441 C2 und der DE 43 43 279 A1 ist es bekannt, zwischen dem Trägerteil und dem Oberteil ein Zwischenteil vorzusehen, das in unterschiedlichen Rastpositionen relativ zum Trägerteil positionierbar ist, um so den unterschiedlichen Sammelschienenbreiten Rechnung zu tragen.

Nachteilig ist bei der Ausbildung der vorbeschriebenen Trägersysteme unter Verwendung von Adaptern bzw. Zwischenteilen, daß die Fixierung der Sammelschienen nicht mittels zweier grundsätzlicher Bauteile, nämlich des Trägerteiles und des Oberteiles erfolgen kann, sondern, daß in Art der Adapter bzw. Zwischenteile separate Elemente erforderlich sind, die den Herstellungs- und Handlingsaufwand bei den bekannten Trägersystemen wesentlich erhöhen. Die Herstellung dieser Trägersysteme ist mit relativ hohen Kosten verbunden und es ist die Anpassung der Sammelschienenträger auf die jeweilige Sammelschienenbreite relativ kompliziert und insbesondere nicht eindeutig zu bewerkstelligen. So besteht durchaus die Gefahr, daß bei Vorgabe relativ schmaler Sammelschienen die Adapter bzw. die Zwischenteile in einer -nicht ordnungsgemäßen Position platziert werden.

Es sind ferner Trägersysteme für Sammelschienen aus der Praxis bekannt geworden, die ohne Zwischenteile ausgeführt sind. Bei diesen ist das Trägerteil in aller Regel symmetrisch gestuft ausgeführt, um so Sammelschienen unterschiedlicher Breite aufnehmen zu können. Eine derartige symmetrische Stufung bedingt aber eine Mittenorientierung bei unterschiedlichen Sammelschienenabmessungen. Es befinden sich damit die oberen Kanten der Sammelschienen für alle Abmessungen nicht auf derselben Position. Übliche Aufbaugeräte nutzen diese Kante aber als Referenzkante. Hierbei ergeben sich häufig Probleme bei der Anpassung von Blendensystemen. - Ein derartiger Sammelschienenträger, der gemäß der Eingangs genannten Art ausgebildet ist, ist aus der DE 199 08 464 A1 bekannt. Bei diesem weist das Trägerteil im Bereich mehrerer Längsseiten die symmetrischen Stufungen auf, so dass durch Drehen des Trägerteils, vorzugsweise um 90° um dessen Längsachse die unterschiedlich gestuften Bereiche des Trägerteils in Wirkstellung mit Sammelschienen unterschiedlicher Breite gebracht werden können. Abgesehen von der nachteiligen Mittenorientierung ist das Trägerteil des Sammelschienenträgers sehr aufwendig gestaltet und lässt sich nur kompliziert montieren, da auf die genaue Ausrichtung des Trägerteils zu achten ist.

Aus der DE 43 29 428 C1 ist ein Installationsgerät für Sammelschienen eines Sammelschienensystems bekannt, das mit Hakenteilen an den Sammelschienen einhängbar ist und zumindest im Bereich einer Sammelschiene mittels einer federbelasteten, schwenkbar im Gerät gelagerten Arretierung selbsttätig relativ zu dieser Sammelschiene rastend festlegbar ist. Die Arretierung besteht aus mehreren unterschiedlich langen Verriegelungshebeln, die unabhängig voneinander um eine gemeinsame Achse im Gerät schwenkbar gelagert sind. Entsprechend der jeweils vorgegebenen Breite der Sammelschiene wird diese zwischen dem freien Ende desjenigen Verriegelungshebels, dessen Länge mit dem Überbrückungsabstand von Achse der Verriegelungshebel und festzulegender Sammelschiene übereinstimmt und dem dieser Sammelschiene zugeordneten Hakenteil festgelegt.

Aus der FR-A-2,308,173 ist ein Sammelschienenträger mit einer Aufnahmenut für die formschlüssige Einlage eines eine Stromschiene enthaltenden Trägerteils, einem auf das Trägerteil deckelartig aufsetzbaren und dabei die in der Aufnahmenut des Trägerteils liegende Stromschiene fixierenden Oberteil, sowie einem der Aufnahmenut zugeordneten Element zum Verkleinern der Nutbreite zwecks Anpassung an eine andere Sammelschienenbreite bekannt. Das Element ist als Anschlag ausgebildet, der zur Anordnung einer breiteren Stromschiene innerhalb des Trägerteils angeordnet ist und zur Bewegung einer schmäleren Stromschiene aus dem Trägerteil beweglich ist Der Anschlag und das Trägerteil bilden dabei ein Bauteil, wobei der Anschlag mittels eines biegsamen Verbindungssteges mit dem Trägerteil verbunden ist. Wird eine breitere Stromschiene in das Trägerteil eingesetzt, bewegt sich der Anschlag nach unten und biegt hierbei den Verbindungssteg. Wird die breitere Stromschiene demontiert, nimmt der elastische Verbindungssteg seine ursprüngliche Stellung ein. Eine schmälere Stromschiene kann dann in der Flucht des Verbindungssteges zwischen dem Anschlag und dem Trägerteil platziert werden.

Aufgabe der Erfindung ist es, einen Sammelschienenträger der eingangs genannten Art so weiter zu bilden, dass dieser unterschiedliche Sammelschienenabmessungen klemmen kann und auf einfache Art hierauf einstellbar ist. Hierbei sollen sich die oberen Kanten der Sammelschienen für alle Abmessungen auf dergleichen Position befinden. Der Sammelschienenträger soll besonders einfach herstellbar und damit besonders kostengünstig sein.

Gelöst wird die Aufgabe bei einem Sammelschienenträger der eingangs genannten Art dadurch, dass das jeweilige Element als Anschlag ausgebildet ist, der zur Anordnung einer breiteren Sammelschiene innerhalb des Trägerteils positionierbar ist und zur Anordnung einer schmäleren Sammelschiene aus dem Trägerteil beweglich ist, wobei die Anschläge und das Trägerteil ein Bauteil bilden, sowie der jeweilige Anschlag sich in seiner herausbewegten Stellung mit seiner der Stromschiene abgewandten Seite am Trägerteil abstützt und mittels eines Filmscharniers mit dem Trägerteil verbunden ist.

Ein erster grundsätzlicher Unterschied zum Stand der Technik besteht darin, dass keine Adapter verwendet werden, somit Elemente, die durch Stecken bzw. Rastieren mit dem Trägerteil verbunden werden, sondern das jeweilige Element, das erfindungsgemäß als Anschlag ausgebildet ist, mit dem Unterteil eine Baueinheit bildet. Die Anschläge stellen somit einen elementaren Bestandteil des Unterteils dar. Ein weiterer grundsätzlicher Unterschied zum Stand der Technik ist darin zu sehen, dass bewusst nicht eine Anpassung des Sammelschienenträgers an eine Vielzahl von Sammelschienenbreiten erreicht werden soll, sondern nur an zwei Sammelschienenbreiten, wobei es sich bevorzugt um Breitenabmessungen von 20 bzw. 30 mm handelt, bei einer Stärke der jeweiligen Sammelschiene von 5 bzw. 10 mm. Infolgedessen ist das Trägerteil bei eingefahrenen Anschlägen auf die größere der beiden Sammelschienenbreiten ausgelegt, wobei die jeweilige Sammelschiene in üblicher Art und Weise zwischen zwei auf dieses Sammelschienbreitenmaß abgestimmten Ansätzen des Trägerteils positioniert ist. Zum Umrüsten des Sammelschienenträgers auf das schmälere Sammelschienetimaß ist es nur erforderlich, den jeweiligen Anschlag aus dem Trägerteil herauszubewegen, womit er zwischen die beiden Ansätze, die die jeweils breitete Sammelschiene positionieren, bewegt wird. Die schmälere Sammelschiene wird zwischen dem herausbewegten Anschlag und demjenigen der beiden Ansätze positioniert, an dem die Sammelschiene mit ihrer oberen Kante anliegt. Für die beiden Sammelschienenbreitenmaße verbleiben damit die Referenzkanten für ein eventuelles Blendensystem auf derselben Höhe.

Sieht man von Befestigungselementen zum Verbinden von Oberteil und Trägerteil sowie Zubehörteilen ab, besteht der erfindungsgemäße Sammelschienenträger nur aus zwei Bauteilen, nämlich dem Trägerteil mit den elementaren Bestandteil bildenden Anschlägen und dem Oberteil.

Der jeweilige Anschlag stützt sich demnach in seiner aus dem Trägerteil herausbewegten bzw. ausgeklappten Stellung mit seiner der Sammelschiene abgewandten Seite am Trägerteil ab. Hierdurch ist eine eindeutige Positionierung des Anschlages relativ zur Sammelschiene gewährleistet und es kann der in aller Regel unterhalb der zugeordneten Sammelschiene angeordnete Anschlag Gewichtskräfte der Sammelschiene direkt in das Trägerteil einleiten. Der Anschlag lässt sich besonders einfach herstellen und als elementarer Bestandteil des Trägerteils ausbilden, weil er mittels eines Filmscharniers mit dem Trägerteil verbunden ist. Vorzugsweise ist der jeweilige Anschlag innerhalb einer Öffnung des Trägerteils angeordnet und im Bodenbereich des Trägerteils, somit auf der der Sammelschiene abgewandten Seite des Trägerteils mit diesem verbunden.

Insbesondere bestehen das Trägerteil, die Anschläge und das Oberteil aus einem Isolierwerkstoff, bei dem es sich in aller Regel um Kunststoff handelt. Die vorgenannten Teile sind vorzugsweise im Spritzguß hergestellt.

Um ein Rückfedern der Anschläge, insbesondere vor der Montage der Sammelschienen zu verhindem, ist gemäß einer besonderen Ausführungsform der Erfindung vorgesehen, daß dem jeweiligen Anschlag ein Halteelement zugeordnet ist, das den Anschlag in der herausbewegten bzw. ausgeklappten Stellung fixiert. Das Halteelement bildet vorzugsweise mit dem Trägerteil, somit auch mit den Anschlägen, eine Baueinheit. Vorzugsweise ist das jeweilige Halteelement als Nut oder Steg ausgebildet, die bzw. der in der ausgeklappten Stellung des Anschlags mit einem Steg bzw. einer Nut des Anschlags zusammenwirkt. Es ist insbesondere daran gedacht, daß dieses Zusammenwirken durch Klemmen erfolgt.

Während die Anpassung des Sammelschienenträgers auf die unterschiedlich breiten Sammelschienen mittels der Anschläge erfolgt, ist zwecks Anpassung des Sammelschienenträgers an unterschiedliche Stärken der Sammelschienen vorgesehen, daß das Tragelement auf seiner dem Oberteil abgewandten Seite mit Distanzelementen bestückbar ist. Es handelt sich insbesondere um plattenförmige Elemente aus Kunststoff, die mit einer Mittenbohrung versehen ist, so daß beim Befestigen des Trägerelementes im Schaltschrank, Schaltgerüst usw. mittels Schrauben oder dergleichen diese Distanzelemente durchsetzt und damit definiert positioniert werden.

Weitere Merkmale der Erfindung sind in der Beschreibung der Figuren und den Figuren selbst dargestellt, wobei bemerkt wird, daß alle Merkmale und Einzelmerkmale erfindungswesentlich sind.

In den Figuren ist die Erfindung anhand eines Ausführungsbeispieles dargestellt, ohne hierauf beschränkt zu sein. Es zeigt:
- Figur 1: in einer räumlichen Ansicht der Sammelschienenträger mit drei von diesen aufgenommenen Sammelschienen, die eine relativ breite Abmessung aufweisen,
- Figur 2: eine Explosionsdarstellung des Sammelschienenträgers gemäß Figur 1,
- Figur 3: für die Anwendung nach den Figuren 1 und 2 einen Schnitt durch das Trägerteil und die von diesem aufgenommenen breiteren Sammelschienen,
- Figur 4: eine räumliche Darstellung des Sammelschienenträgers mit drei von diesem aufgenommenen, relativ schmalen Sammelschienen,
- Figur 5: eine Explosionsdarstellung des in Figur 4 gezeigten Sammelschienenträgers
- Figur 6: für die Anwendung nach den Figuren 4 und 5 einen Schnitt durch das Trägerteil und die von diesem aufgenommenen schmaleren Sammelschienen,
- Figur 7: das Trägerteil in einem Zustand gemäß der Darstellung in den Figuren 1 bis 3, gezeigt in einer Draufsicht für einen Endbereich des Trägerteils.

Der Sammelschienenträger 1 zur Befestigung von drei stromführenden Sammelschienen 2 besteht im wesentlichen aus dem ortsfest fixierbaren Trägerteil 3 und dem mit diesem verschraubbaren Oberteil 4. Miteinander fluchtende Lochpaare 5 dienen dem Einführen von Schraubwerkzeugen bzw. Schrauben (nicht dargestellt) zum Befestigen des Trägerteils 3, zum Beispiel an einer nicht gezeigten Wand eines Schaltschrankes.

Das Trägerteil 3 weist auf seiner der Wand abgewandten Seite zwei äußere Ansätze 6 sowie zwei innere Ansätze 7 auf. Das lichte Abstandsmaß des jeweiligen äußeren Ansatzes zu dem diesem zugeordnet ten inneren Ansatz 7 bzw. der beiden inneren Ansätze 7 ist so bemessen, daß die zugeordnete Stromschiene 2, die eine relativ große Breitenabmessung, zum Beispiel 30 mm aufweist, mit ge-ringem Spiel zwischen den zugeordneten Ansätzen in den gebildeten Aufnahmenuten 22 positioniert werden kann. Die Abstände der Ansätze 6 bzw. 7 voneinander sind dabei so gewählt, daß die Sammelschienen 2 denselben Abstand voneinander einnehmen.

Das Trägerteil 3 weist auf seiner dem Oberteil 4 zugewandten Seite, jeweils zwischen den Sammelschienen 2, kreisförmige Zentriervorsprünge 8 zum zentrierten Positionieren des Oberteils 4 bezüglich des Trägerteils 3 auf. Beim Aufsetzen des Oberteils 4 auf die drei Sammelschienen 2 zum Klemmen der Sammelschienen 2 zwischen Oberteil 4 und Trägerteil 3 durchsetzen nicht dargestellte Ansätze am Oberteil 4 die Zentriervorsprünge 8 im Trägerteil 3, so daß eine eindeutige Relativposition zwischen Oberteil 4 und Trägerteil 3 gewährleistet, die nur eine Zustellbewegung des Oberteils 4 zum Trägerteil 3 gestattet. Dies erfolgt mittels vier Schrauben 9, die Bohrungen 10 im Oberteil 3 durchsetzen und in Gewindebohrungen 23 des Trägerteils 3 einschraubbar sind.

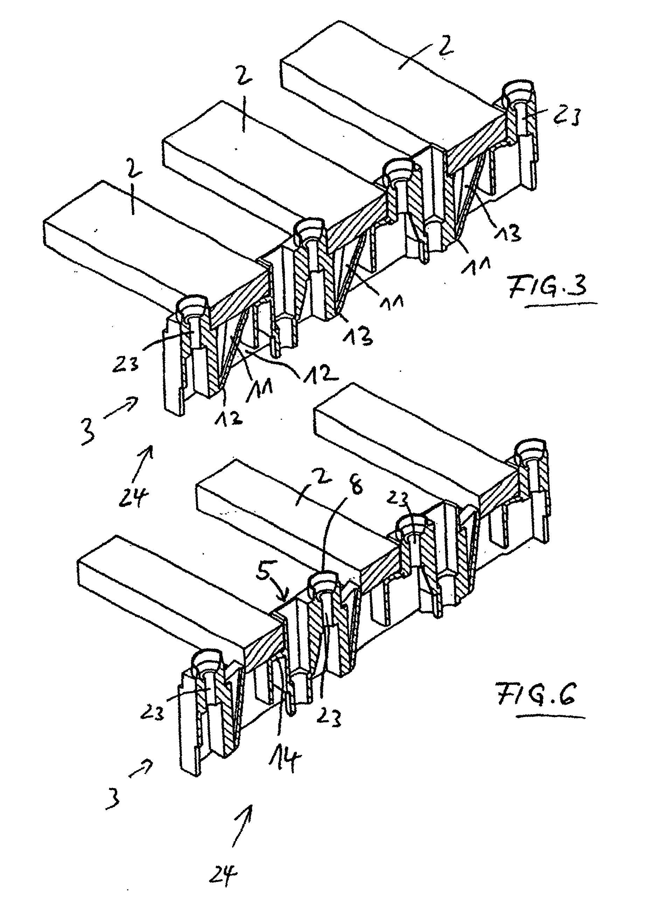

Die Schnittdarstellung gemäß den Figuren 3 und 7 veranschaulicht, daß, für den Fall der relativ breiten Sammelschienen 2, ein jeder Sammelschiene zugeordneter Anschlag 11 in demjenigen Bereich des Trägerteils 3 angeordnet ist, der sich unterhalb der zugeordneten Sammelschiene 2 befindet. Der jeweilige Anschlag 11 ist innerhalb einer Öffnung 12 des Trägerteils 3 angeordnet und im Bereich seines unteren, spitz zulaufenden Endes mittels eines Filmscharnieres 13 mit dem Trägerteil 3 verbunden, so daß das Trägerteil 3 und die drei diesem zugeordneten Anschläge 11 ein Bauteil bilden. Ausgehend von dem Filmscharnier 13 weist der jeweilige Anschlag 11 eine sich konisch erweiternde Querschnittsform auf. Auf seiner dem nächstliegenden Ansatz 6 bzw. 7 zugewandten Seite und oben ist der jeweilige Anschlag 11 mit einer Nut 15 versehen, und der betreffende Aufsatz 6 bzw. 7 mit einem auf den Anschlag 7 zugerichteten Steg 16. Die Stege sind aufgrund der Herstellung des Trägerteils 3 durch Spritzen Bestandteil des Bauteils 24.

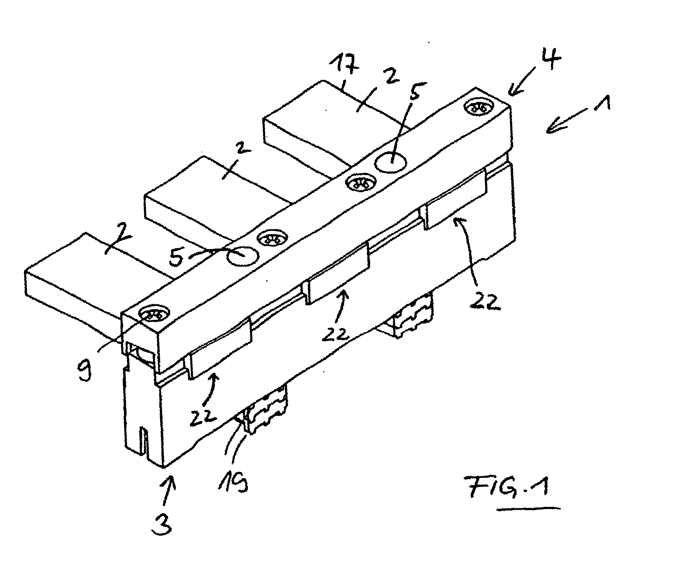

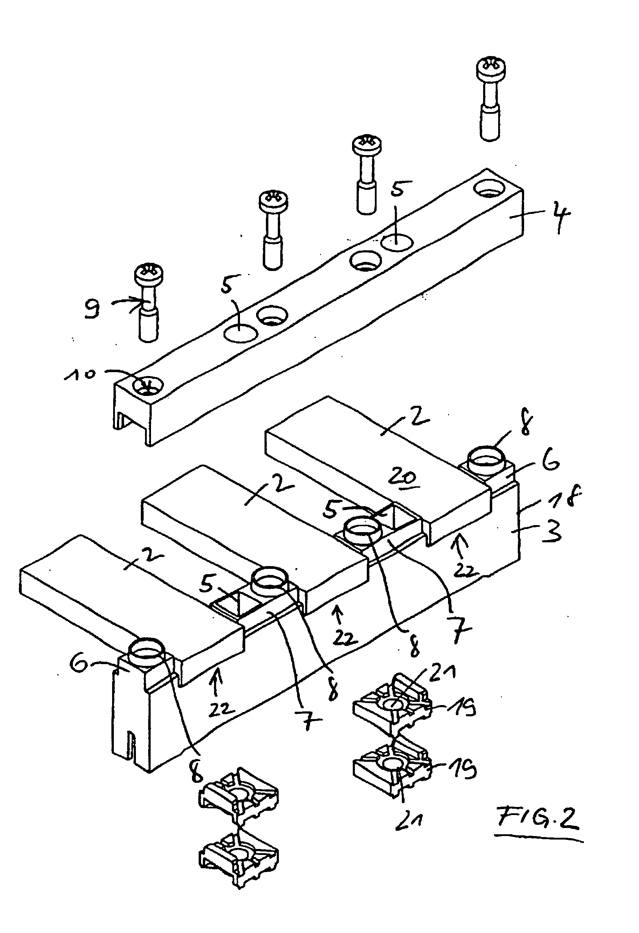

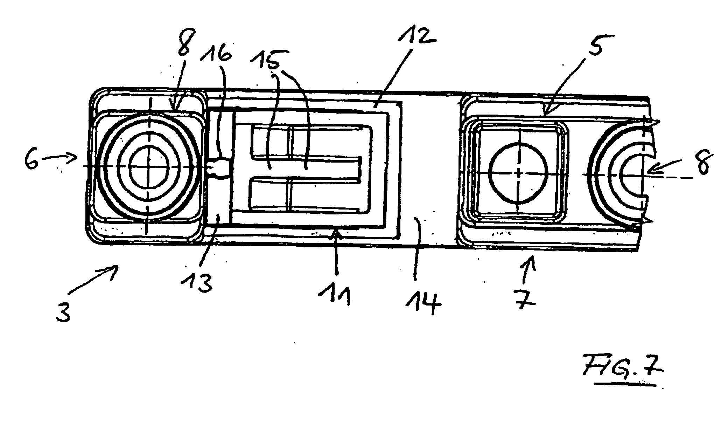

Soll der Sammelschienenträger, im Unterschied zu der Ausführungsform nach den Figuren 1 bis 3, der Aufnahme von Stromschienen 2 geringerer Breite dienen, zum Beispiel solcher mit einer Breite von 20 mm, wird der jeweilige Anschlag 11 aus seiner in Figur 3 gezeigten Ausgangsposition, unterhalb der relativ breiteren Sammelschiene 2, in die in Figur 6 gezeigte Position geschwenkt bzw. geklappt, in der sein dem Filmscharnier 13 abgewandtes, einen spitzen Winkel bildendes Ende über das Auflagenniveau der Sammelschiene 2 auf einer Schulter 14 des Trägerteils 3 hinaussteht, womit sich der Anschlag 11 nunmehr neben der zugeordneten Sammelschiene 2 befindet. In der vollständig verschwenkten Position ist der Anschlag 11 mit seiner Nut 15 auf den Steg 16 des Trägerteils 3 aufgesteckt und es kontaktiert vorzugsweise, um eine definierte Endposition des Anschlags 10 zu bilden, der Anschlag 11 den zugeordneten Ansatz 6 bzw. 7. In dieser Position ist die relativ schmälere Sammelschiene 2 definiert zwischen dem Anschlag 11 und dem der Sammelschiene 2 zugeordneten Ansatz 6 bzw. 7 fixiert.

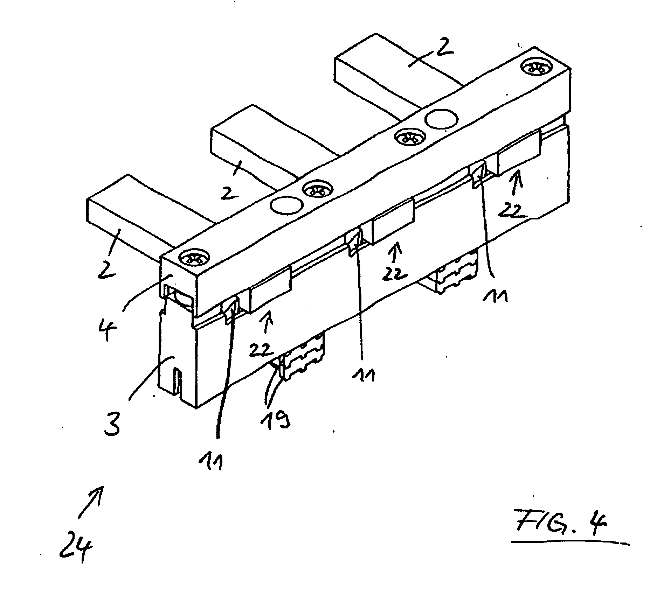

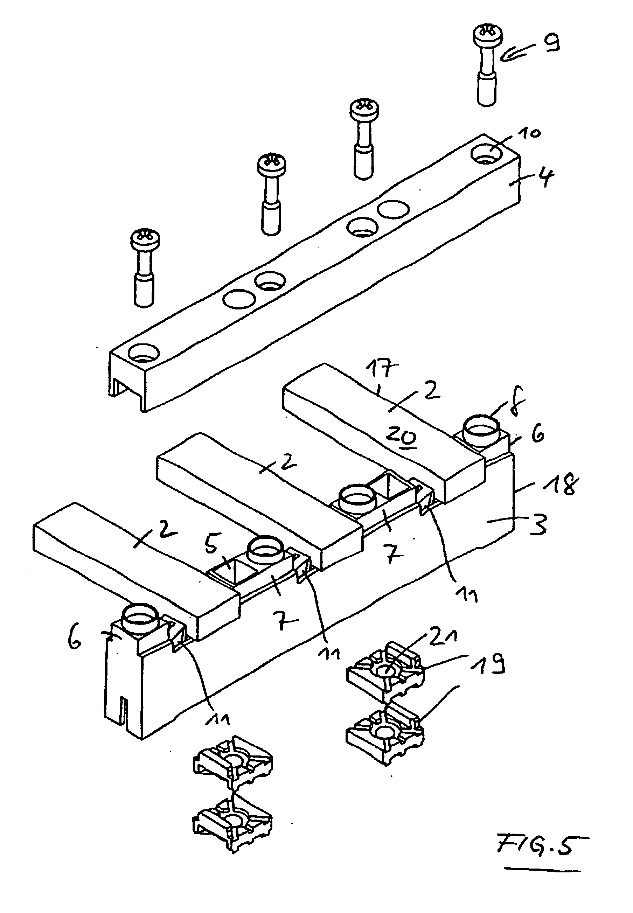

Die Ausführungsbeispiele gemäß den Figuren 1 bis 6 zeigen die Verwendung des Sammelschienenträgers 1 für zwei Anordnungen unterschiedlich breiter Sammelschienen 2, die allerdings dieselbe Stärke aufweisen. Die Anordnung der Anschläge 11 auf derselben Seite der Sammelschienen 2 stellt sicher, daß die Oberkante 17 der jeweiligen Sammelschiene 2, unabhängig von der jeweiligen Sammelschienenbreite, immer im selben Abstand zu einem Referenzmaß verbleibt, das durch die Oberkante des Sammelschienenträgers 1, konkret durch die Oberkante 18 des Trägerteils 3 vorgegeben ist.

Durch die Verwendung von Distanzelementen 19 zwischen dem Trägerteil 3 und der Wand, an dem das Trägerteil 3 befestigt wird, kann erreicht werden, daß das Abstandsmaß der Oberfläche 20 der jeweiligen Sammelschiene 20, unabhängig von deren Stärke, konstant bleibt. Bei der Verwendung relativ dünner Sammelschienen 2, wie in den Figuren 1 bis 6 veranschaulicht, zum Beispiel solcher mit einer Stärke von 5 mm, werden beispielsweise zwei Paare von aufeinander gesteckten Distanzelementen 19 zwischen dem Trägerteil 3 und der Wand plaziert, wobei die beiden Schrauben zum Befestigen des Trägerteils 3 an der Wand Bohrungen 21 in den Distanzelementen 19 durchsetzen und diese damit fixieren. Sind andererseits Sammelschienen 2 mit einer Stärke von 10 mm anzubringen, kann auf die Anordnung der die Distanzdicke von 5 mm überbrückenden Distanzelemente 19 verzichtet werden.

Der Sammelschienenträger 1, wobei im weitesten Sinne hierunter auch die Distanzelemente 19 verstanden werden, nicht aber die Befestigungsschrauben zum Befestigen des Oberteils 4 am Trägerteil 3 und des Trägerteils 3 an der Wand, bestehen vorzugsweise aus Kunststoff, wobei es sich um Spritzgußteile handelt.

## Patentansprüche

1. Sammelschienenträger (1) mit einem mehrere, insbesondere drei, parallele Aufnahmenuten (22) für die formschlüssige Einlage jeweils einer Stromschiene (2) enthaltenen Trägerteil (3), einem auf das Trägerteil (3) deckelartig aufsetzbaren und dabei die in den Aufnahmenuten (22) des Trägerteils (3) liegenden Stormschienen (2) fixierenden Oberteil (4), sowie mindestens einem der jeweiligen Aufnahmenut (22) zugeordneten Element (11) zum Verkleinem der Nutbreite zwecks Anpassung an eine andere Sammelschienenbreite, **dadurch gekennzeichnet, dass** das jeweilige Element als Anschlag (11) ausgebildet ist, der zur Anordnung einer breiteren Stromschiene (2) innerhalb des Trägerteils (3) angeordnet ist und zur Anordnung einer schmäleren Stromschiene (2) aus dem Trägerteil (3) beweglich ist, wobei die Anschläge (11) und das Trägerteil (3) ein Bauteil (24) bilden, sowie der jeweilige Anschlag (11) sich in seiner herausbewegten Stellung mit seiner der Stromschiene (2) abgewandten Seite am Trägerteil (3) abstützt und mittels eines Filmscharnieres (13) mit dem Trägerteil (3) verbunden ist.

2. Sammelschienenträger nach Anspruch 1, **dadurch gekennzeichnet, daß** der jeweilige Anschlag (11) innerhalb einer diesem zugewandten Öffnung (12) des Trägerteils (13) angeordnet ist und im Bodenbereich des Trägerteils (3) mit diesem verbunden ist.

3. Sammelschienenträger nach Anspruch 1 oder 2, **dadurch gekennzeichnet, daß** das Trägerteil (3) und/oder das Oberteil (4) und/oder die Anschläge (11) aus Isolierwerkstoff, insbesondere aus Kunststoff bestehen.

4. Sammelschienenträger nach Anspruch 3, **dadurch gekennzeichnet, daß** das Trägerteil (3) mit den Anschlägen (11) und/oder das Oberteil (4) als Spritzgußteil ausgebildet sind.

5. Sammelschienenträger nach einem der Ansprüche 1 bis 4, **dadurch gekennzeichnet, daß** dem jeweiligen Anschlag (11) ein Halteelement (15, 16) zugeordnet ist, daß den Anschlag (11) in der herausbewegten Stellung fixiert.

6. Sammelschienenträger nach Anspruch 5, **dadurch gekennzeichnet, daß** das Halteelement (15, 16) eine Nut (15) und einen Steg (16) aufweist, wobei eines dieser Elemente (15 bzw. 16) mit dem Trägerteil (3) eine Baueinheit bildet und das andere dieser Elemente Bestandteil des Anschlags (11) ist.

7. Sammelschienenträger nach Anspruch 6, **dadurch gekennzeichnet, daß** die Nut (15) und der Steg (16) klemmend zusammenwirken.

8. Sammelschienenträger nach einem der Ansprüche 1 bis 9, **dadurch gekennzeichnet, daß** die herausbewegten Anschläge (11), bezogen auf eine vertikal beabstandete Anordnung der horizontal orientierten Sammelschienen (2), die jeweilige Sammelschiene (2) unten kontaktieren.

9. Sammelschienenträger nach einem der Ansprüche 6 bis 8, **dadurch gekennzeichnet, daß** der jeweilige Anschlag (11), ausgehend von seiner Verbindung mit dem Trägerteil (3), eine sich konisch erweiternde Querschnittsform aufweist.

10. Sammelschienenträger nach einem der Ansprüche 1 bis 9, **dadurch gekennzeichnet, daß** das Trägerteil (3) auf seiner dem Oberteil (4) abgewandten Seite mit Distanzelementen (19) bestückbar ist.

11. Sammelschienenträger nach einem der Ansprüche 1 bis 10, **dadurch gekennzeichnet, daß** der jeweilige Anschlag (11) aus dem Trägerteil (3) klappbar ist.

## Claims

1. Bus bar support (1) with several, particularly three, parallel holding grooves (22) for the positive insert of a support part (3) containing conductor bars (2), a top part (4) which can be put on the support part (3) like a lid to lock the conductor bars (2) lying in the holding grooves (22) of the support part (3), and at least one element (11) assigned to the relevant holding groove (22) for reducing the width of the groove in order to adapt it to another width of bus bar, **characterised by the fact** that the relevant element is made as a stop (11) which is assigned to arrange a wider conductor bar (2) inside the support part (3) and can be moved out of the support part (3) to arrange a narrower conductor bar (2), in which the stops (11) and the support part (3) form a component (24) and the relevant stop (11) is supported on the support part (3) on the side facing away from the conductor bar (2) in the position where it has moved out and it is connected to the support part (3) by means of a film hinge (13).

2. Bus bar support according to claim 1, **characterised by the fact** that the relevant stop (11) is located inside an opening (12) of the support part (13) facing it and it is connected to it in the bottom area of the support part (23).

3. Bus bar support according to claim 1 or 2, **characterised by the fact** that the support part (3) and/or the top part (4) and/or the stops (11) are made of insulating material, particularly plastic.

4. Bus bar support according to claim 3, **characterised by the fact** that the support part (3) with the stops (11) and/or the top part (4) are made as injection moulded parts.

5. Bus bar support according to claims 1 to 4, **characterised by the fact** that the relevant stop (11) has a holding element (15, 16) assigned to it, which locks the stop (11) in the position where it has moved out.

6. Bus bar support according to claim 5, **characterised by** the fact that the holding element (15, 16) has a groove (15) and a crosspiece (16), in which one of these elements (15 or 16) forms an assembly with the support part (3) and the other one of these elements is a component of the stop (11).

7. Bus bar support according to claim 6, **characterised by the fact** that the groove (15) and crosspiece (16) work together as a clamp.

8. Bus bar support according to one of claims 1 to 9, **characterised by the fact** that the stops (11) which have moved out have contact with the relevant bus bars (2) below with reference to a vertically offset arrangement of the horizontal bus bars (2).

9. Bus bar support according to one of claims 6 to 8, **characterised by** the fact that the relevant stop (11) has a cross section which extends conically from its connection to the support part (3).

10. Bus bar support according to one of claims 1 to 9, **characterised by the fact** that the support part (3) can be equipped with distance elements (19) on the top part (4).

11. Bus bar support according to one of claims 1 to 10, **characterised by the fact** that the relevant stop (11) can be folded out of the support part (3).

## Revendications

1. Support de barres bus (1) muni d'une partie support (3) contenant plusieurs, notamment trois, rainures de logement parallèles (22) pour insérer par complémentarité de forme respectivement une barre conductrice (2), d'une partie supérieure (4) pouvant être posée comme un couvercle sur la partie support (3) et fixant les barres conductrices (2) reposant dans les rainures de logement (22) de la partie support (3), ainsi que d'au moins un élément (11) associé à la rainure de logement respective (22) destiné à réduire la largeur de cette rainure afin de l'adapter à une autre largeur de barre bus,
**caractérisé en ce que**
l'élément respectif est formé comme une butée (11), disposée à l'intérieur de la partie support (3) pour la disposition d'une barre conductrice (2) plus large, et déplaçable hors de la partie support (3) pour la disposition d'une barre conductrice (2) plus étroite, les butées (11) et la partie support (3) formant un élément de construction (24), et la butée (11) respective, avec son côté détourné des barres conductrices (2), s'appuyant sur la partie support (3) dans sa position sortie, et étant raccordée à la partie support (3) au moyen d'une charnière en film (13).

2. Support de barres bus selon la revendication 1,
**caractérisé en ce que**
la butée respective (11) est disposée à l'intérieur d'une ouverture (12) de la partie support (3) tournée vers celle-ci, et est raccordée à la partie support (3) dans la zone du fond de celle-ci.

3. Support de barres bus selon la revendication 1 ou 2,
**caractérisé en ce que**
la partie support (3) et/ou la partie supérieure (4) et/ou les butées (11) sont composées de matériau isolant, notamment de plastique.

4. Support de barres bus selon la revendication 3,
**caractérisé en ce que**
la partie support (3) avec les butées (11) et/ou la partie supérieure (4) sont formées comme pièce moulée par injection.

5. Support de barres bus selon l'une quelconque des revendications 1 à 4,
**caractérisé en ce que**
la butée respective (11) est associée à un élément d'arrêt (15, 16) qui fixe la butée (11) en position sortie.

6. Support de barres bus selon la revendication 5,
**caractérisé en ce que**
l'élément d'arrêt (15, 16) présente une rainure (15) et une entretoise (16), l'un de ces éléments (15 resp. 16) formant un module avec la partie support (3) et l'autre de ces éléments faisant partie de la butée (11).

7. Support de barres bus selon la revendication 6,
**caractérisé en ce que**
la rainure (15) et l'entretoise (16) coopèrent par blocage.

8. Support de barres bus selon l'une quelconque des revendications 1 à 9,
**caractérisé en ce que**
les butées sorties (11), par rapport à une disposition verticale avec des écarts des barres bus (2) orientées horizontalement, entrent en contact avec les barres bus respectives (2) par en dessous.

9. Support de barres bus selon l'une quelconque des revendications 6 à 8,
**caractérisé en ce que**
la butée respective (11), en partant de son raccord avec la partie support (3), présente une section s'élargissant de manière conique.

10. Support de barres bus selon l'une quelconque des revendications 1 à 9,
**caractérisé en ce que**
la partie support (3) peut être équipée d'éléments d'écartement (19) sur son côté détourné de la partie supérieure (4).

11. Support de barres bus selon l'une quelconque des revendications 1 à 10,
**caractérisé en ce que**
la butée respective (11) peut être rabattue sur la partie support (3).
